# EUROPÄISCHE PATENTSCHRIFT

(11) **EP 1 215 013 B1**
(45) Veröffentlichungstag und Bekanntmachung des Hinweises auf die Patenterteilung: **15.10.2003**
(21) Anmeldenummer: 01125834.0
(22) Anmeldetag: 30.10.2001
(51) Int. Cl.: B25B 5/16, B25B 7/02, B25B 1/24

(54) **Spannbacke für ein Backenfutter**
Clamping jaw for a chuck
Mâchoire pour mandrin

(30) Priorität: 12.12.2000 DE 20021045 U
(43) Veröffentlichungstag der Anmeldung: 19.06.2002
(73) Patentinhaber: CERATIZIT Horb GmbH, 72160 Horb (DE); LVT Löt- und Verschleisstechnik GmbH, D-57520 Steinebach (DE)
(72) Erfinder: Märzhäuser, Peter, 57520 Steinebach (DE); Schmid, Hans-Peter, 72285 Pfalzgrafenweiler (DE)
(74) Vertreter: Späth, Dieter, Dipl.-Ing.

(56) Entgegenhaltungen:
- DE-A- 3 929 857
- DE-A- 4 209 307
- US-A- 4 778 730

## Beschreibung

Die Erfindung betrifft eine Spannbacke für ein Backenfutter gemäß dem Oberbegriff des Anspruchs 1.

Backenfutter sind für Bohr-, Dreh- oder Fräsmaschinen bekannt. Sie weisen Spannbacken auf, die in ihrem Abstand voneinander verstellbar sind, um ein üblicherweise zylindrisches Werkzeug (Werkzeugschaft) oder Werkstück spannen zu können. Spannbacken qualitativ hochwertiger Backenfutter weisen einen Grundkörper aus Stahl auf, dessen Spannfläche zur Verschleißminderung mit einer Platte, Leiste oder dgl. aus Hartmetall versehen ist. Dieses Hartmetall-Teil ist durch Hartlöten mit dem Grundkörper verbunden. Die Spannfläche der Spannbacke ist diejenige Fläche oder auch Kante, die beim Spannen eines Werkzeugs oder Werkstücks an dem Werkzeug oder Werkstück anliegt. Das Hartmetall-Teil vermindert den Verschleiß der Spannbacke und erhöht bei langem Gebrauch und einer Vielzahl an Ein- und Ausspannvorgängen eine Spanngenauigkeit koaxial zum Backenfutter.

Auf Grund der unterschiedlichen Wärmedehnungen von Hartmetall und Stahl kommt es jedoch beim Abkühlen der Spannbacken nach dem Hartlöten zu einem Spannungsverzug, der Grundkörper wird gebogen. Deswegen ist es erforderlich, dass der Grundkörper nach dem Hartlöten nachgeschliffen wird, um eine hohe Spanngenauigkeit zu erzielen. Das Nachschleifen hat zunächst den Nachteil des damit verbundenen Arbeitsaufwandes. Weiterer Nachteil ist, dass das Nachschleifen Schleifspuren an der Spannbacke hinterlässt, aus denen erkennbar ist, dass die Spannbacke nachgeschliffen worden ist. Dies ist aus ästhetischen Gründen unerwünscht. Hinzu kommt, dass vordere Stimflächen der nachgeschliffenen Spannbacken unterschiedlich groß erscheinen. Dies kann am zusammengebauten Backenfutter, wenn die Spannbacken zusammengefahren sind, erkennbar sein. Insgesamt kann eine nachgeschliffene Spannbacke, auch wenn sie technisch einwandfrei ist, den Eindruck erwecken, die Spannbacke sei eigentlich ein Ausschussteil, das nachbearbeitet worden ist, um es dennoch verwenden zu können. Es kann also der Eindruck entstehen, die nachgeschliffene Spannbacke sei qualitativ minderwertig.

Die DE-A 42 09 307 offenbart ein Bohrfutter mit Spannbacken, deren Spannflächen ein härteres Material aufweisen. Das härtere Material kann beispielsweise Diamantstaub sein, der als Oberflächenbeschichtung mit einem Bindemittel aus Kunstharz auf die Spannflächen der Spannbacken aufgebracht ist. Zweck ist eine erhöhte Verschleißfestigkeit beim Spannen von Werkzeugen, deren Spannschaft aus Hartmetal oder einem entsprechenden Material großer Härte besteht. Hier tritt das Problem des Spannungsverzugs nicht auf, da der Diamantstaub ohne Erwärmen der Spannbacke mit einem Bindemittel aus Kunstharz aufgebracht wird.

Der Erfindung liegt die Aufgabe zu Grunde, eine Spannbacke mit einer Hartmetall bestückten Spannfläche vorzuschlagen, bei der ein Nachschleifen ihres Grundkörpers nicht erforderlich ist.

Diese Aufgabe wird erfindungsgemäß durch die Merkmale des Anspruchs 1 gelöst. Die Spannfläche der erfindungsgemäßen Spannbacke ist mit Hartmetall-Partikeln anstatt mit einem durchgehenden Hartmetall-Teil bestückt. Die Hartmetall-Partikel sind durch Hartlöten mit dem Grundkörper der Spannbacke verbunden. Die Hartmetall-Partikel können Körner oder ein Granulat aus Hartmetall sein. Die Hartmetall-Partikel üben beim Abkühlen der Spannbacke nach dem Hartlöten keinen Zug oder Druck auf den Grundkörper der Spannbacke in Folge unterschiedlicher Temperaturdehnungen aus und verformen deswegen den Grundkörper nicht. Die Maßgenauigkeit der erfindungsgemäßen Spannbacke ist dadurch höher, so dass ein Nachschleifen des Grundkörpers zur Erzielung einer ausreichenden Maßgenauigkeit nicht notwendig ist.

Anstatt aus Stahl kann der Grundkörper der erfindungsgemäßen Spannbacke auch aus einem anderen Metall bestehen.

Um einen stabilen Spannsitz eines eingespannten Werkzeugs oder Werkstücks zu erzielen sind die Hartmetall-Partikel, mit denen die Spannfläche der erfindungsgemäßen Spannbacke bestückt ist, in bevorzugter Ausgestaltung der Erfindung kantig. Die kantigen Partikel drücken mit Kanten und Ecken gegen das eingespannte Werkzeug oder Werkstück und halten dieses dadurch stabil.

Zur Erzielung einer ausreichend hohen Spanngenauigkeit kann es bei Ausgestaltungen der Erfindung erforderlich sein, die die Spannfläche bildenden Partikel nach dem Hartlöten formzubearbeiten, insbesondere zu schleifen. Unter Umständen ist eine Formbearbeitung der Spannfläche entbehrlich, wenn die Hartmetall-Partikel vor dem Hartlöten mit ausreichender Genauigkeit auf die Spannfläche des Grundkörpers aufgebracht worden sind und ihre Lage während des Hartlötens nicht verändern.

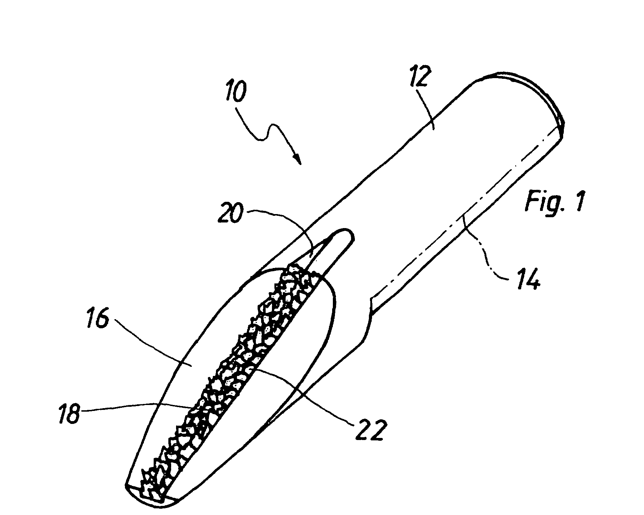

Die Erfindung wird nachfolgend anhand eines in der Zeichnung dargestellten Ausführungsbeispiels näher erläutert. Die einzige Figur zeigt eine erfindungsgemäße Spannbacke in perspektivischer Darstellung.

Die in der Zeichnung dargestellte, erfindungsgemäße Spannbacke 10 weist einen Grundkörper 12 aus Stahl auf. Der Grundkörper 12 weist eine zylindrische Grundform auf. Auf einer Seite der Spannbacke 10 ist über einen Teil ihrer Länge eine zahnstangenförmige Verzahnung 14 ausgebildet, um die Spannbacke 10 zum Spannen beispielsweise eines Bohrers in einem Bohrfutter (Backenfutter) verschieben zu können. Die Verzahnung 14 ist in der Zeichnung mit einer Strichpunktlinie angedeutet. An einem Ende endet die Spannbacke 10 mit einer Schrägfläche 16, die auf einer der Verzahnung 14 gegenüberliegenden Seite angeordnet ist. Zur Ausbildung einer Spannfläche 18 ist der Grundkörper 12 der Spannbacke 10 im Bereich der Schrägfläche 16 mit einer Längsnut 20 versehen, in die ein Hartmetall-Granulat 22 eingebettet und durch Hartlöten mit dem Grundkörper 12 verbunden ist. Das Hartmetall-Granulat 22 weist kantige Hartmetall-Partikel auf, die die eigentliche Spannfläche 18 bilden. Sofern die Anordnung des Hartmetall-Granulats 22 nach dem Hartlöten nicht ausreicht, kann das Hartmetall-Granulat 22 nach dem Hartlöten formgeschliffen werden (nicht dargestellt).

## Patentansprüche

1. Spannbacke für ein Backenfutter, mit einem Grundkörper aus Metall, der eine Spannfläche mit einem härteren Material aufweist, **dadurch gekennzeichnet, dass** die Spannfläche (18) Hartmetall-Partikel (22) aufweist, die durch Hartlöten mit dem Grundkörper (12) verbunden sind.

2. Spannbacken nach Anspruch 1, **dadurch gekennzeichnet, dass** die Hartmetall-Partikel (22) kantig sind.

3. Spannbacke nach Anspruch 1 oder 2, **dadurch gekennzeichnet, dass** die Spannfläche (18) formbearbeitet ist.

4. Spannbacke nach Anspruch 3, **dadurch gekennzeichnet, dass** die Spannfläche (18) geschliffen ist.

## Claims

1. Clamping jaw for a jaw chuck, said jaw having a main body member which is formed from metal and has a clamping surface consisting of a harder material, **characterised in that** the clamping surface (18) has hard metal particles (22) which are connected to the main body member (12) by hard-soldering.

2. Clamping jaw according to claim 1, **characterised in that** the hard metal particles (22) are angular.

3. Clamping jaw according to claim I or 2, **characterised in that** the clamping surface (18) is moulded.

4. Clamping jaw according to claim 3, **characterised in that** the clamping surface (18) is ground.

## Revendications

1. Mâchoire de serrage pour un mandrin à mâchoires, comprenant un corps de base en métal qui présente une surface de serrage composée d'un matériau plus dur, **caractérisée en ce que** la surface de serrage (18) présente de particules de métal dur (22) qui sont fixées au corps de base (12) par brasage fort.

2. Mâchoire de serrage selon la revendication 1, **caractérisée en ce que** les particules de métal dur (22) sont anguleuses.

3. Mâchoire de serrage selon la revendication 1 ou 2, **caractérisée en ce que** la surface de serrage (18) est façonnée.

4. Mâchoire de serrage selon la revendication 3, **caractérisée en ce que** la surface de serrage (18) est taillée.
